# EUROPEAN PATENT SPECIFICATION

(11) **EP 4 305 491 B1**
(45) Date of publication and mention of the grant of the patent: **02.04.2025**
(21) Application number: 22706407.8
(22) Date of filing: 16.02.2022
(51) Int. Cl.: G02F 1/15, G02F 1/1506, G02F 1/1523

(54) **GEL ELECTROLYTE AND ELECTROCHROMIC ELEMENT**
GEL-ELEKTROLYT UND ELEKTROCHROMES ELEMENT
ÉLECTROLYTE EN GEL ET ÉLÉMENT ÉLECTROCHROME

(30) Priority: 12.03.2021 JP 2021039826
(43) Date of publication of application: 17.01.2024
(73) Proprietor: Ricoh Company, Ltd., Tokyo 143-8555 (JP)
(72) Inventor: OHYA, Kayato, Tokyo 143-8555 (JP); KANEKO, Fuminari, Tokyo 143-8555 (JP); FUKUDA, Tomoo, Tokyo 143-8555 (JP); YUTANI, Keiichiroh, Tokyo 143-8555 (JP); TSUTSUI, Takashi, Tokyo 143-8555 (JP)
(74) Representative: SSM Sandmair
(86) International application number: PCT/IB2022/051349
(87) International publication number: WO 2022/189874

(56) References cited:
- JP-A- 2011 253 753

## Description

### [Technical Field]

The present disclosure relates to a gel electrolyte and an electrochromic element.

### [Background Art]

In electrochromic elements formed of electrochromic materials, what matter when obtaining transparent display devices and when building devices by laminating three color developing layers for cyan (C), magenta (M), and yellow (Y) are that the devices be formed of a material having a clear, colorless state and that each layer be free of optical strain such as wrinkles or unlevelness and be excellent in optical uniformity.

As electrolytes, many electrochemical elements use liquid electrolytes obtained by dissolving supporting electrolytes in water or organic solvents. However, liquid electrolytes have drawbacks that they change over time along with long-term storage of the electrochemical elements, leak due to breakage, and are difficult to cut in size and thickness. Hence, through solidification of electrolytes, solid thin-film electrolyte materials that are easy to handle and have a high safety and a high ionic conductivity are actively researched and developed.

Studies into polymeric solid electrolytes have two major approaches. One is a gel electrolyte containing a liquid electrolyte in a network-like polymer matrix, and the other is a polymeric solid electrolyte containing a supporting electrolyte dissolved in a polymer having a polyether structure such as polyethylene oxide and polypropylene oxide.

The gel electrolyte is produced as a polymer swelled with a liquid electrolyte through a polymerization reaction in the liquid electrolyte mixed with a monomer, or produced through swelling of a polymer by immersion of a polymer matrix, which has been prepared previously by polymerization, in a liquid electrolyte.

In a gel electrolyte, a polymer matrix basically merely has a function of embracing a liquid electrolyte and does not contribute to ionic conduction, whereas the liquid electrolyte in the polymer matrix mainly takes charge in ionic conduction. Because ions can relatively freely migrate in the polymer matrix, the gel electrolyte can relatively easily realize a high ionic conductivity comparable to the ionic conductivity of a liquid electrolyte.

Because of a high liquid electrolyte content, a gel electrolyte does not tend to develop self-adhesiveness. Therefore, during conveyance in a roll-to-roll process used for mass film formation and during storage in a roll shape, a protective film may peel from the gel electrolyte, to deform and damage the gel electrolyte.

Hence, for a gel electrolyte having no self-adhesiveness, for example, a method of sandwiching the gel electrolyte between protective films having adhesive layers from both sides of the gel electrolyte has been proposed as a method for preventing the electrolyte film from being wrinkled or unlevel during conveyance and storage, and peeling a protective film from the gel electrolyte for use (for example, see PTL 1).

Meanwhile, the other polymeric solid electrolyte containing a supporting electrolyte dissolved in a polymer having a polyether structure can dissolve one monovalent cation by four oxygen atoms of the ether structure. This cation hops through the ether structure formed of a polymeric chain and serves as an ionic conductor. Such a polymeric solid electrolyte free of a liquid electrolyte is characterized by easy developability of self-adhesiveness.

### [Citation List]

### [Patent Literature]

[PTL 1]
Japanese Unexamined Patent Application Publication No. 2011-253753

### [Summary of Invention]

### [Technical Problem]

The present disclosure has an object to provide a gel electrolyte having self-adhesiveness that prevents the gel electrolyte from peeling from non-adhesive protective films during conveyance and storage in order to prevent occurrence of optical strain due to deformation of the gel electrolyte, but that enables the gel electrolyte to be easily peeled from the non-adhesive protective film for use.

### [Solution to Problem]

According to one aspect of the present disclosure, a gel electrolyte contains a cured product of an electrolyte composition containing a binder resin and a supporting electrolyte. The gel electrolyte has a peeling index of 5.5 mm⁻¹ or greater but 7.5 mm⁻¹ or less. The peeling index is obtained by dividing a maximum stress by an integral value obtained by integrating a stress based on a peeling distance, where the stress, the peeling distance, and the maximum stress are measured by a probe tack test performed at an environmental condition of 25°C by bringing a stainless steel probe having a diameter of 5 mm into contact with the gel electrolyte having an average thickness of 700 micrometers from above the gel electrolyte at a speed of 120 mm/second, keeping the stainless steel probe under a pressing load of 40 gf for a pressing load retention time of 5 seconds, and peeling the stainless steel probe in a perpendicular direction at a speed of 400 mm/second.

### [Advantageous Effects of Invention]

The present disclosure can provide a gel electrolyte having self-adhesiveness that prevents the gel electrolyte from peeling from non-adhesive protective films during conveyance and storage in order to prevent occurrence of optical strain due to deformation of the gel electrolyte, but that enables the gel electrolyte to be easily peeled from the non-adhesive protective film for use.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

[FIG. 1]

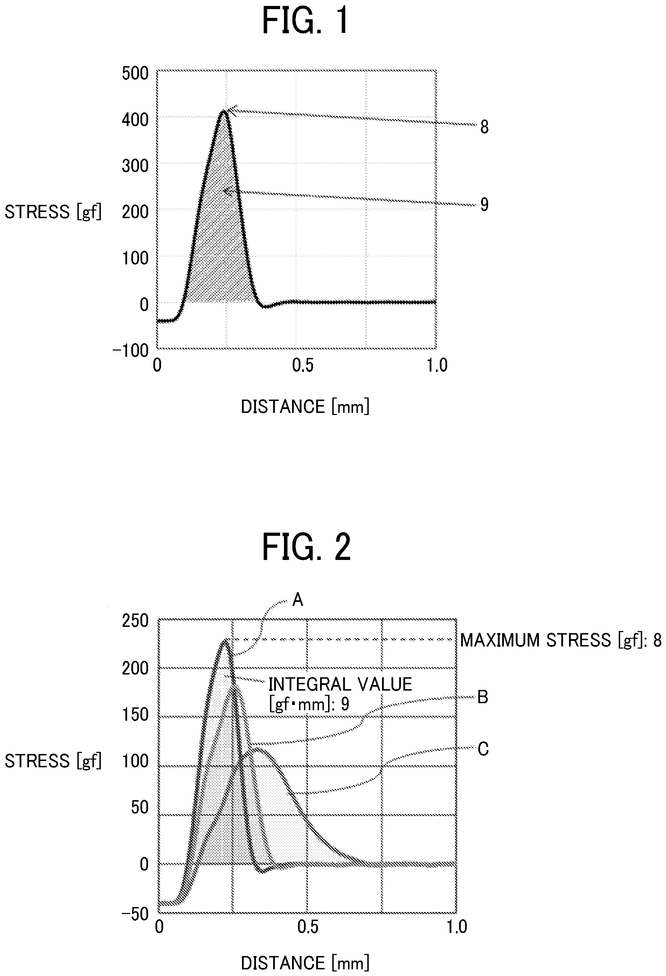

   FIG. 1 is a graph plotting a measurement result of a tack force of a gel electrolyte of the present disclosure.
[FIG. 2]
   FIG. 2 is a graph plotting a relationship between peeling distance and stress.
[FIG. 3]

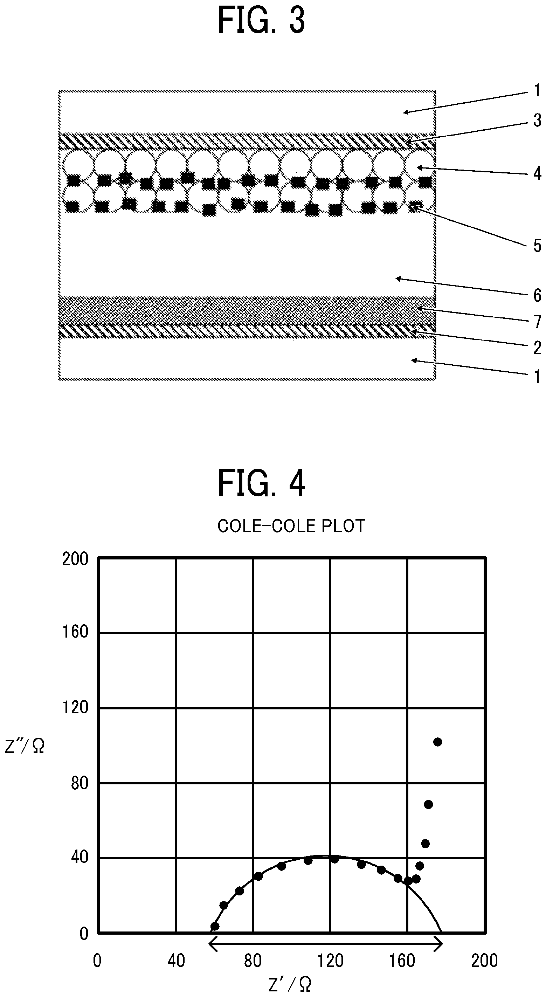

   FIG. 3 is a schematic diagram illustrating an electrochromic element of the present disclosure.
[FIG. 4]
   FIG. 4 is a graph plotting a waveform obtained by impedance measurement at a measurement temperature of 25°C.

### [Description of Embodiments]

The terminology used herein is for the purpose of describing particular embodiments only and is not intended to be limiting of the present invention. As used herein, the singular forms "a", "an" and "the" are intended to include the plural forms as well, unless the context clearly indicates otherwise.
In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### (Gel electrolyte)

A gel electrolyte of the present disclosure contains a cured product of an electrolyte composition containing a binder resin and a supporting electrolyte. The gel electrolyte has a peeling index of 5.5 mm⁻¹ or greater but 7.5 mm⁻¹ or less. The peeling index is obtained by dividing a maximum stress by an integral value obtained by integrating a stress based on a peeling distance, where the stress, the peeling distance, and the maximum stress are measured by a probe tack test performed at an environmental condition of 25°C by bringing a stainless steel probe having a diameter of 5 mm into contact with the gel electrolyte having an average thickness of 700 micrometers from above the gel electrolyte at a speed of 120 mm/second, keeping the stainless steel probe under a pressing load of 40 gf for a pressing load retention time of 5 seconds, and peeling the stainless steel probe in a perpendicular direction at a speed of 400 mm/second.

The existing technique (Japanese Unexamined Patent Application Publication No. 2011-253753) has drawbacks that the adhesive layer migrates into the electrolyte film, and that the electrolyte film cannot exert a sufficient adhesiveness to a transfer medium when transferred to the transfer medium and the protective film cannot be peeled from the electrolyte film stably.

Moreover, the existing technique of sandwiching a fluorine-based soft polymeric solid electrolyte between non-adhesive protective films in order to prevent the fluorine-based soft polymeric solid electrolyte from being wrinkled or unlevel during conveyance and storage has a drawback that there are many constraints such as a need for carriers to be protons having a small ionic radius in order to realize a high ionic conductivity despite the fluorine-based polymeric solid electrolyte's low mobility compared with a liquid electrolyte, and a need for use in a high-humidity environment.

Hence, in the present disclosure, a probe tack test is performed at an environmental condition of 25°C by bringing a SUS304 probe having a diameter of 5 mm into contact with the gel electrolyte having an average thickness of 700 micrometers from above the gel electrolyte at a speed of 120 mm/second, keeping the probe under a pressing load of 40 gf for a pressing load retention time of 5 seconds, and peeling the probe in a perpendicular direction at a speed of 400 mm/second, to measure a stress and a peeling distance. As a result, a peak illustrated in FIG. 1 is obtained. Hence, a maximum stress 8 (unit: gf), and an integral value 9 (unit: gf·mm) resulting from integration of the stress based on the peeling distance are obtained as illustrated in FIG. 1. A value obtained by dividing the maximum stress 8 by the integral value 9 is defined as a peeling index (unit: mm⁻¹). The probe tack test can be performed using, for example, a tacking tester (available from Rhesca Co., Ltd., TAC-II).

The gel electrolyte having an average thickness of 700 micrometers may be a laminate of gel electrolytes laminated to an average thickness of 700 micrometers.

When the peeling index satisfies the range of 5.5 mm⁻¹ or greater but 7.5 mm⁻¹ or less, two conflicting properties can both be satisfied: (1) adhesiveness that prevents the gel electrolyte from peeling from non-adhesive protective films during roll-to-roll conveyance and storage, and (2) peelability that enables the gel electrolyte to be easily peeled from non-adhesive protective film for use.

As plotted in FIG. 2, the peeling index is the ratio between the maximum stress (maximum load) 8 and the integral value 9, and is a numeric representation of the shape of the curve of a stress vs. peeling distance profile. Therefore, the peak is more acute as the peeling index is greater, and is lower and gentler as the peeling index is less. At a peak B of an adequate level (a peeling index of 6.3 mm⁻¹), the properties (1) and (2) described above can both be satisfied. At a low gentle peak C (a peeling index of 4.0 mm⁻¹), only the property (1) is satisfied, meaning that the gel electrolyte hardly peels. At an acute high peak A (a peeling index of 7.6 mm⁻¹), only the property (2) is satisfied, meaning that the gel electrolyte easily peels.

Hence, in the present disclosure, what matters in order to satisfy both of the properties (1) and (2) described above is that the peeling index satisfy the range of 5.5 mm⁻¹ or greater but 7.5 mm⁻¹ or less as plotted in FIG. 2.

The peeling index represents the reciprocal of a strain when the gel electrolyte is elongated under the maximum stress measured in the probe tack test, i.e., the degree of deformation resistance. Hence, the peeling index has a high correlation with a strain obtained by dividing by the maximum stress, an elastic modulus obtained by dynamic viscoelasticity measurement based on Hooke's law.

A gel electrolyte's peeling from protective films between which the gel electrolyte is sandwiched from both sides during conveyance and storage is considered due to a buckling phenomenon that occurs when a compressive stress occurring at the interface between the gel electrolyte and the protective films due to bending and twisting exceeds an allowable buckling stress. When the protective film conditions are fixed, the compressive stress occurring at the interface between the gel electrolyte and the protective films is determined by the stiffness of the gel electrolyte calculated based on the elastic modulus and thickness of the gel electrolyte. As the stiffness is lower, it is expected that the gel electrolyte exhibits a higher buckling resistance. Moreover, as the tack force of the gel electrolyte is higher, it is expected that the allowable buckling stress is higher and the gel electrolyte exhibits a higher buckling resistance.

On the other hand, when peeling a protective film from the gel electrolyte by warping the protective film during processing, it is preferable that the gel electrolyte not follow the protective film warped, i.e., that the gel electrolyte have a high stiffness.

Hence, in order to satisfy both of buckling resistance during conveyance and storage and a good peelability during processing, what matters significantly is the balance between the tack force of the gel electrolyte and the stiffness of the gel electrolyte. The peeling index representing the degree of deformation resistance when the gel electrolyte is elongated is suitable for evaluating this balance.

When the conveying direction is changed at a conveying roller in a roll-to-roll process during mass film formation, and when the film is wound around a roller-shaped core and stored, a compressive stress, which is the cause of a buckling phenomenon, is applied to the gel electrolyte and the protective films. When the peeling index is 7.5 mm⁻¹ or less, an excellent buckling resistance can be achieved.

A good peelability of the protective film during processing can be sufficiently achieved when the peeling index is 5.5 mm⁻¹ or greater. When the peeling index is less than 5.5 mm⁻¹, there is a greater possibility that the gel electrolyte will undergo plastic deformation or damaging due to fingering instability.

The gel electrolyte of the present disclosure having the peeling index of 7.5 mm⁻¹ or less can be prevented from polymer film deformation or damage due to peeling of the non-adhesive protective films during conveyance and storage. This is because a compressive stress that occurs when the gel electrolyte is bent is suppressed to lower than or equal to the allowable buckling stress enhanced by the self-adhesiveness of the gel electrolyte.

"Peeling of the non-adhesive protective films during conveyance and storage" described above means peeling of the protective films from the gel electrolyte due to a buckling phenomenon that occurs when the gel electrolyte sandwiched between the non-adhesive protective films from both sides is conveyed by a conveying roller commonly used or when the gel electrolyte sandwiched between the non-adhesive protective films from both sides is wound around a roller-shaped core and stored.

The gel electrolyte of the present disclosure having the peeling index of 5.5 mm⁻¹ or greater can achieve a good peelability of the non-adhesive protective film, and can be transferred to a transfer medium without deformation or damage. This is because a resultant force between an adhesive force of the gel electrolyte with the transfer medium and a resisting force generated by the stiffness of the gel electrolyte when the non-adhesive protective film is peeled by warping exceeds an adhesive force between the non-adhesive protective film and the gel electrolyte.

"A good peelability of the non-adhesive protective film" described above means that when the non-adhesive protective film is peeled from the electrolyte film as needed, the electrolyte film is suppressed from being deformed or damaged due to following the non-adhesive protective film that is desired to be peeled.

In the present disclosure, the shear storage modulus of the gel electrolyte is preferably 0.02 MPa or greater and more preferably 0.04 MPa or greater.

When the shear storage modulus of the gel electrolyte is 0.02 MPa or greater, the gel electrolyte will exhibit an excellent peeling index in the probe tack test described above. A gel electrolyte having a shear storage modulus of less than 0.02 MPa is relatively likely to deform. Therefore, even if such a gel electrolyte satisfies the peeling index described above, it may deform due to other factors (e.g., excessive pressurization).

In order to prevent mixing of bubbles, it is often the case that a gel electrolyte film is transferred to a transfer medium under a vacuum condition. For example, transfer by a vacuum laminator falls within this case. In this case, the atmospheric pressure (0.101 MPa) is applied to the gel electrolyte film. A gel electrolyte film having a shear storage modulus of 0.04 MPa or greater does not deform even when such a pressure is applied.

The shear storage modulus of the gel electrolyte can be measured with, for example, a dynamic viscoelasticity measuring instrument (available from UBM Co., Ltd., RHEOSOL-G5000).

An electrolyte composition in the gel electrolyte of the present disclosure contains a binder resin and a supporting electrolyte, and further contains other components as needed.

### <Supporting electrolyte>

The supporting electrolyte is not particularly limited and may be appropriately selected depending on the intended purpose. Examples of the supporting electrolyte include, but are not limited to, solid electrolytes that are formed of combinations of cations and anions and are solid at room temperature, and ionic liquids.

### -Solid electrolytes-

Cations of the solid electrolytes are not particularly limited and may be appropriately selected depending on the intended purpose. Examples of cations of the solid electrolyte include, but are not limited to, metal ions such as Li salts, Na salts, K salts, and Mg salts; imidazole derivatives such as N,N-dimethyl imidazole salts, N,N-methyl ethyl imidazole salts, N,N-methyl propyl imidazole salts, N,N-methyl butyl imidazole salts, and N,N-allyl butyl imidazole salts; pyridinium derivatives such as N,N-dimethyl pyridinium salts, and N,N-methyl propyl pyridinium salts; pyrrolidinium derivatives such as N,N-dimethyl pyrrolidinium salts, N-ethyl-N-methyl pyrrolidinium salts, N-methyl-N-propyl pyridinium salts, N-butyl-N-methyl pyrrolidinium salts, N-methyl-N-pentyl pyrrolidinium salts, and N-hexyl-N-methyl pyrrolidinium salts; and aliphatic quaternary ammoniums such as trimethylpropyl ammonium salts, trimethylhexyl ammonium salts, and triethylhexyl ammonium salts.

Anions of the solid electrolytes are not particularly limited and may be appropriately selected depending on the intended purpose. Examples of anions of the solid electrolytes include, but are not limited to, chlorine anion, bromine anion, iodine anion, BF₄⁻, BF₃CF₃⁻, BF₃C₂F₅⁻, PF₆⁻, NO₃⁻, CF₃CO₂⁻, CF₃SO₃⁻, (CF₃SO₂)₂N⁻, (FSO₂)₂N⁻, (CF₃SO₂)(FSO₂)N⁻, (CN)₂N⁻, (CN)₃C⁻, (CN)₄B⁻, (CF₃SO₂)₃C⁻, (C₂F₅SO₂)₂N⁻, (C₂F₅)₃PF₃⁻, AlCl₄⁻, and Al₂Cl₇⁻.

The cations and the anions may be used in any combinations freely selected. One of the cations and one of the anions may be used alone, or a plurality of cations of the cations and a plurality of anions of the anions may be used in combination.

The solid electrolyte may be directly dissolved in the binder resin. However, when the solid electrolyte is lowly soluble in the binder resin, a solution obtained by dissolving the solid electrolyte in a small amount of a solvent may be used for being mixed with the binder resin.

The solvent is not particularly limited and may be appropriately selected depending on the intended purpose. Examples of the solvent include, but are not limited to, propylene carbonate, acetonitrile, γ-butyrolactone, ethylene carbonate, sulfolane, dioxolane, tetrahydrofuran, 2-methyl tetrahydrofuran, dimethyl sulfoxide, 1,2-dimethoxyethane, 1,2-ethoxymethoxyethane, polyethylene glycol, and alcohols. One of these solvents may be used alone or two or more of these solvents may be used in combination.

As the supporting electrolyte, a combination of an anion and a cation having a melting point lower than or equal to room temperature is preferable. That is, an ionic liquid is preferable as the supporting electrolyte. An ionic liquid enjoys a good liquid retaining property of the binder resin. This facilitates expression of a tack property, and a gel electrolyte exhibits an excellent peeling index in the probe tack test described above even when it contains a high-concentration ionic liquid.

### -Ionic liquids-

Examples of the ionic liquids include, but are not limited to, ethyl methyl imidazolium tetracyanoborate (available from Merck KGaA), ethyl methyl imidazolium bistrifluoromethane sulfonimide (available from Kanto Chemical Co., Inc.), ethyl methyl imidazolium tripentafluoroethyl trifluorophosphate (available from Merck KGaA), ethyl methyl imidazolium bis(fluorosulfonyl)imide (available from Kanto Chemical Co., Inc.), ethyl methyl imidazolium diethylphosphate (available from Tokyo Chemical Industry Co., Ltd.), butyl methyl imidazolium hexafluorophosphate (available from Tokyo Chemical Industry Co., Ltd.), ethyl methyl imidazolium trifluoromethane sulfonato (available from Tokyo Chemical Industry Co., Ltd.), ethyl methyl imidazolium acetate (available from Tokyo Chemical Industry Co., Ltd.), ethyl methyl imidazolium tricyanomethanide (available from Tokyo Chemical Industry Co., Ltd.), ethyl methyl imidazolium dicyanamide (available from Tokyo Chemical Industry Co., Ltd.), methyloctyl imidazolium hexafluorophosphate (available from Tokyo Chemical Industry Co., Ltd.), methyl propyl pyrrolidinium bisfluorosulfonimide (available from Kanto Chemical Co., Inc.), butyl methyl imidazolium tetrafluoroborate (available from Tokyo Chemical Industry Co., Ltd.), butyl methyl imidazolium bis(trifluoromethanesulfonyl)imide (available from Tokyo Chemical Industry Co., Ltd.), hexylmethyl imidazolium bis(trifluoromethyl sulfonyl)imide (available from Kanto Chemical Co., Inc.), and allyl butyl imidazolium tetrafluoroborate (available from Kanto Chemical Co., Inc.). One of these ionic liquids may be used alone or two or more of these ionic liquids may be used in combination. Among these ionic liquids, ethylmethylimidazolium bisfluorosulfonimide, ethyl methyl imidazolium tetracyanoborate, ethyl methyl imidazolium bistrifluoromethane sulfonimide, ethyl methyl imidazolium tripentafluoroethyl trifluorophosphate, and allyl butyl imidazolium tetrafluoroborate are preferable, and ethylmethylimidazolium bisfluorosulfonimide is particularly preferable.

The proportion of the ionic liquid is preferably 70% by mass or greater and more preferably 80% by mass or greater relative to the total amount of the electrolyte composition in the gel electrolyte. When the proportion of the ionic liquid is 70% by mass or greater, a gel electrolyte having a higher ionic conductivity can be obtained.

### <Binder resin>

The binder resin is not particularly limited and may be appropriately selected depending on the intended purpose. Examples of the binder resin include, but are not limited to, acrylic resins, polyester resins, urethane resins, polyether resins, polyamide resins, polysaccharide-based resins such as cellulose derivatives, polyacrylamide-based resins, polyvinyl ester-based resins, and resins obtained by polymerizing photopolymerizable monomers and photopolymerizable oligomers. One of these binder resins may be used alone or two or more of these binder resins may be used in combination. Among these binder resins, resins obtained by polymerizing photopolymerizable monomers and photopolymerizable oligomers are particularly preferable because they can be produced easily.

As the photopolymerizable monomers, monofunctional photopolymerizable monomers, and multifunctional photopolymerizable monomers such as difunctional photopolymerizable monomers and trifunctional or higher photopolymerizable monomers are used.

Examples of the monofunctional photopolymerizable monomers include, but are not limited to, 2-(2-ethoxyethoxy)ethyl acrylate, methoxypolyethylene glycol monoacrylate, methoxypolyethylene glycol monomethacrylate, methyl methacrylate, phenoxypolyethylene glycol acrylate, 2-acryloyloxyethyl succinate, acryloylmorpholine, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxytriethylene glycol acrylate, phenoxytetraethylene glycol acrylate, cetyl acrylate, isostearyl acrylate, stearyl acrylate, and styrene monomers. One of these monofunctional photopolymerizable monomers may be used alone or two or more of these monofunctional photopolymerizable monomers may be used in combination.

Examples of the difunctional photopolymerizable monomers include, but are not limited to, 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, and neopentyl glycol diacrylate. One of these difunctional photopolymerizable monomers may be used alone or two or more of these difunctional photopolymerizable monomers may be used in combination. In the above listing, "EO-modified" means ethylene oxy-modified, and "PO-modified" means propylene oxy-modified.

Examples of the trifunctional or higher photopolymerizable monomers include, but are not limited to, trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl)isocyanurate, dipentaerythritol hexaacrylate (DPHA), caprolactone-modified dipentaerythritol hexaacrylate, dipentaerythritol hydroxypenta acrylate, alkyl-modified dipentaerythritol pentaacrylate, alkyl-modified dipentaerythritol tetraacrylate, alkyl-modified dipentaerythritol triacrylate, dimethylolpropane tetraacrylate (DTMPTA), pentaerythritol ethoxytetraacrylate, EO-modified phosphoric acid triacrylate, and 2,2,5,5-tetrahydroxymethyl cyclopentanone tetraacrylate. One of these trifunctional or higher photopolymerizable monomers may be used alone or two or more of these trifunctional or higher photopolymerizable monomers may be used in combination.

Examples of the photopolymerizable oligomers include, but are not limited to, urethane acrylates, epoxy acrylates, acrylic acrylates, polyester acrylates, polyethylene glycol acrylates, methyl methacrylates, ethyl methacrylates, butyl methacrylates, and various reactive polymers.

Commercially available products may be used as the photopolymerizable oligomers. Examples of the commercially available products include, but are not limited to, urethane acrylates such as BLEMMER (R)DA-800AU (available from NOF Corporation), BLEMMER (R)TA-604AU (available from NOF Corporation), CN9030 (available from TOMOE Engineering Co., Ltd.), CN9010 NS (available from TOMOE Engineering Co., Ltd.), CN9029 (available from TOMOE Engineering Co., Ltd.), CN8885 NS (available from TOMOE Engineering Co., Ltd.), CN9013 NS (available from TOMOE Engineering Co., Ltd.), CN970 (available from TOMOE Engineering Co., Ltd.), CN971 (available from TOMOE Engineering Co., Ltd.), CN972 (available from TOMOE Engineering Co., Ltd.), CN975 NS (available from TOMOE Engineering Co., Ltd.), UX-3204 (available from Nippon Kayaku Co., Ltd.), UX-4101 (available from Nippon Kayaku Co., Ltd.), UXT-6100 (available from Nippon Kayaku Co., Ltd.), UX6101 (available from Nippon Kayaku Co., Ltd.), UX8101 (available from Nippon Kayaku Co., Ltd.), UX0937 (available from Nippon Kayaku Co., Ltd.), UXF-4001-M35 (available from Nippon Kayaku Co., Ltd.), UXF-4002 (available from Nippon Kayaku Co., Ltd.), UX-5000 (available from Nippon Kayaku Co., Ltd.), UA-4200 (available from Shin-Nakamura Chemical Co., Ltd.), UA-160TM (available from Shin-Nakamura Chemical Co., Ltd.), UA-290TM (available from Shin-Nakamura Chemical Co., Ltd.), UA-7100 (available from Shin-Nakamura Chemical Co., Ltd.), UA-W2A (available from Shin-Nakamura Chemical Co., Ltd.), UV-3000B (available from Mitsubishi Chemical Corporation), UV-3200B (available from Mitsubishi Chemical Corporation), UV-3300B (available from Mitsubishi Chemical Corporation), UV3640B (available from Mitsubishi Chemical Corporation), UV-3640PE80 (available from Mitsubishi Chemical Corporation), UA-306H (available from Kyoeisha Chemical Co., Ltd.), UA-306T (available from Kyoeisha Chemical Co., Ltd.), and UA-306I (available from Kyoeisha Chemical Co., Ltd.); epoxy acrylates such as BAEA-100 (available from KSM CO.,LTD.), BAEM-100 (available from KSM CO.,LTD.), R-115F (available from Nippon Kayaku Co., Ltd.), R-130 (available from Nippon Kayaku Co., Ltd.), R-381 (available from Nippon Kayaku Co., Ltd.), EAM-2160 (available from Nippon Kayaku Co., Ltd.), ZFA-266H (available from Nippon Kayaku Co., Ltd.), EA-1010N (available from Shin-Nakamura Chemical Co., Ltd.), EA-1010LC (available from Shin-Nakamura Chemical Co., Ltd.), EA-1010NT2 (available from Shin-Nakamura Chemical Co., Ltd.), and EA-1020LC3 (available from Shin-Nakamura Chemical Co., Ltd.); acrylic acrylates such as EBECRYL 303 (available from DAICEL-ALLNEX LTD.), EBECRYL 1710 (available from DAICEL-ALLNEX LTD.), and EBECRYL 767 (available from DAICEL-ALLNEX LTD.); polyester acrylates such as CN2203 (available from TOMOE Engineering Co., Ltd.), CN2270 (available from TOMOE Engineering Co., Ltd.), CN22073 (available from TOMOE Engineering Co., Ltd.), CN2274 (available from TOMOE Engineering Co., Ltd.), and EBECRYL 820 (available from DAICEL-ALLNEX LTD.); polyethylene glycol acrylates such as AM-90G (available from Shin-Nakamura Chemical Co., Ltd.), AM-130G (available from Shin-Nakamura Chemical Co., Ltd.), and AM-450G (available from Shin-Nakamura Chemical Co., Ltd.); methyl methacrylates such as AM45%AA-6 (available from TOAGOSEI CO., LTD.), AA-6SR (available from TOAGOSEI CO., LTD.), and AA-6 (available from TOAGOSEI CO., LTD.); butyl methacrylates such as AN-6S (available from TOAGOSEI CO., LTD.), AB-6 (available from TOAGOSEI CO., LTD.), and AW-6S (available from TOAGOSEI CO., LTD.); and reactive polymers such as RP-274S (available from KSM CO.,LTD.) and RP-310 (available from KSM CO.,LTD.). One of these commercially available products may be used alone or two or more of these commercially available products may be used in combination.

As the binder resin, a polymer having a polymethyl methacrylate (PMMA) chain is preferable. A polymer having a PMMA chain facilitates expression of a tack property even when the content of the ionic liquid is high, and a gel electrolyte that exhibits an excellent peeling index in the probe tack test described above can be obtained.

Examples of the polymer having a PMMA chain include, but are not limited to, MB-1 (available from TOAGOSEI CO., LTD.), MB-1P (available from TOAGOSEI CO., LTD.), and HYPEARL M4501 (available from Negami Chemical Industrial Co., Ltd).

As the binder resin, a crosslinked body of the polymer having a polymethyl methacrylate (PMMA) chain is more preferable. As the crosslinked body of the polymer having a PMMA chain, a low-molecular-weight PMMA-based monomer having a greater compatibility than a straight-chain PMMA can be used when the gel electrolyte is still at the electrolyte composition stage. Therefore, a low-molecular-weight PMMA-based monomer can be contained in a large amount in the electrolyte composition, and this further facilitates expression of a tack property.

Examples of the crosslinked body of the polymer having PMMA include, but are not limited to, products obtained by allowing reactive oligomers and reactive polymers having a PMMA chain to undergo a cross-linking reaction.

The reactive oligomers having a PMMA chain is not particularly limited and may be appropriately selected depending on the intended purpose. Examples of the reactive oligomers having a PMMA chain include, but are not limited to, a macromonomer AA-6 (available from TOAGOSEI CO., LTD.).

### <Other components>

The other components are not particularly limited and may be appropriately selected depending on the intended purpose. Examples of the other components include, but are not limited to, a polymerization initiator.

The polymerization initiator is not particularly limited and may be appropriately selected depending on the intended purpose. Examples of the polymerization initiator include, but are not limited to, a radical polymerization initiator.

Examples of the radical polymerization initiator include, but are not limited to, a thermal polymerization initiator and a photopolymerization initiator.

Examples of the thermal polymerization initiator include, but are not limited to, azo compounds such as 2,2'-azobisisobutyronitrile, dimethyl-2,2'-azobis isobutyrate, 2,2'-azobis(2,4-dimethylvaleronitrile), 2,2'-azobis[2-(2-imidazolin-2-yl)propane]; and organic peroxides such as 2,5-dimethyl-2,5-bis(tert-butylperoxy)hexane and di(4-tert-butylcyclohexyl)peroxy dicarbonate. One of these thermal polymerization initiators may be used alone or two or more of these thermal polymerization initiators may be used in combination.

Examples of the photopolymerization initiator include, but are not limited to, ketal-based photopolymerization initiators such as 2,2-dimethoxy-1,2-diphenylethan-1-one; acetophenone-based photopolymerization initiators such as 1-hydroxycyclohexyl phenyl ketone, 2,2-diethoxyacetophenone, 2,2-dimethoxy-2-phenyl acetophenone, 4-phenoxydicycloacetophenone, and 4-(t-butyl)dicycloacetophenone; and benzoin ether-based photopolymerization initiators such as benzoin methyl ether, benzoin ethyl ether, benzoin propyl ether, benzoin isopropyl ether, and benzoin isobutyl ether. One of these photopolymerization initiators may be used alone or two or more of these photopolymerization initiators may be used in combination.

The content of the polymerization initiator is not particularly limited, may be appropriately selected depending on the intended purpose, and is preferably 0.001 parts by mass or greater but 5 parts by mass or less, more preferably 0.01 parts by mass or greater but 2 parts by mass or less, and particularly preferably 0.01 parts by mass or greater but 1 part by mass or less relative to 100 parts by mass of all monomer components.

### <Method for producing gel electrolyte film>

It is possible to produce the gel electrolyte film of the present disclosure by mixing the supporting electrolyte, the binder resin, and, as needed, a polymerization initiator to produce an electrolyte composition, sandwiching the produced electrolyte composition between two kinds of films having different peeling strengths, and polymerizing the resultant.

As the polymerization reaction, radical polymerization reaction is preferable, and thermal radical polymerization reaction and photo radical polymerization reaction are more preferable.

Of the films, a film that has a lower peeling strength is not particularly limited and may be appropriately selected depending on the intended purpose. Examples include, but are not limited to, polyethylene films, polypropylene films, polyethylene terephthalate films, polyethylene naphthalate films, polybutylene terephthalate films, liquid crystal polyester films, polyether ketone films, polyimide films, polyamide imide films, polyamide films, aramid films, and polytetrafluoroethylene films having release layers.

The lower limit of the peeling strength of the film is not particularly limited. A peeling strength in a 90° peeling test compliant with JIS Z0237:2009 is preferably 0.15 N/50 mm or greater. Of the films, the other film that has a higher peeling strength is not particularly limited and may be appropriately selected depending on the intended purpose. It is preferable that the peeling strength of the other film be 1.5 times or more greater than the peeling strength of the light release film.

The average thickness of the gel electrolyte of the present disclosure is not particularly limited, may be appropriately selected depending on the intended purpose, and is preferably 10 micrometers or greater but 100 micrometers or less. When the average thickness of the gel electrolyte is 10 micrometers or greater but 100 micrometers or less, buckling resistance during conveyance and storage and a good peelability during processing are more remarkable.

### <Applications of gel electrolyte>

The gel electrolyte of the present disclosure has self-adhesiveness that prevents the gel electrolyte from peeling from non-adhesive protective films during conveyance and storage in order to prevent occurrence of optical strain due to deformation of the gel electrolyte, but that enables the gel electrolyte to be easily peeled from a non-adhesive protective film for use. Therefore, the gel electrolyte of the present disclosure can be suitably used in various electrochemical devices such as electrochromic elements, lithium ion secondary batteries, solar cells, fuel cells, and ion conductive actuators, and can be particularly suitably used in an electrochromic element described below.

### (Electrochromic element)

An electrochromic element of the present disclosure includes a first electrode, a second electrode, an electrochromic layer containing an electrochromic compound between the first electrode and the second electrode, and an electrolyte layer, and further includes other members as needed.

### <Electrolyte layer>

As the electrolyte layer, the gel electrolyte of the present disclosure is used.

The average thickness of the electrolyte layer formed of the gel electrolyte is not particularly limited, may be appropriately selected depending on the intended purpose, and is preferably 1 micrometer or greater but 1,000 micrometers or less.

### <Electrochromic layer>

The electrochromic layer is a functional layer that contains an electrochromic compound and exhibits electrochromism. Examples of the form of the electrochromic layer include, but are not limited to, a layer in which an electrochromic compound and a conductive or semi-conductive nanostructure are bonded with each other, and a layer formed of a polymerized film of a radical polymerizable compound serving as an electrochromic compound.

### -Electrochromic compound-

The electrochromic compound is a material that changes colors through an oxidation reaction or a reduction reaction. Examples of the electrochromic compound include, but are not limited to, radical polymerizable compounds and polymer-based compounds.

The electrochromic compound is not particularly limited, and a known electrochromic compound can be appropriately selected depending on the intended purpose. Examples of the electrochromic compound include, but are not limited to, pigment-based compounds, metal complex-based compounds, and metal oxide-based compounds.

Examples of the pigment-based compounds include, but are not limited to, low-molecular-weight organic electrochromic compounds such as azobenzene-based, anthraquinone-based, diarylethene-based, dihydroprene-based, styryl-based, styryl spiropyran-based, spirooxazine-based, spirothiopyran-based, thioindigo-based, tetrathiafulvalene-based, terephthalic acid-based, triphenylmethane-based, triphenylamine-based, naphthopyran-based, viologen-based, pyrazoline-based, phenazine-based, phenylenediamine-based, phenoxazine-based, phenothiazine-based, phthalocyanine-based, fluoran-based, fulgide-based, benzopyran-based, and metallocene-based; and conductive polymeric compounds such as polyaniline and polythiophene.

Examples of the metal complex-based compounds and the metal oxide-based compounds include, but are not limited to, inorganic electrochromic compounds such as titanium oxide, vanadium oxide, tungsten oxide, indium oxide, iridium oxide, nickel oxide, and Prussian blue.

### -Conductive or semi-conductive nanostructure-

The conductive or semi-conductive nanostructure means a nanostructure having nanoscale unevenness, such as nanoparticles and nano-porous structures.

When the electrochromic compound contains a phosphonic acid group, a phosphoric acid group, or a carboxyl group as a bonding or adsorbing structure, the electrochromic compound easily combines with the nanostructure and becomes an electrochromic composition excellent in retention of a color developed-image. The electrochromic layer can be formed of the electrochromic composition.

The material of the conductive or semi-conductive nanostructure is not particularly limited and may be appropriately selected depending on the intended purpose. A metal oxide is preferable in terms of transparency and conductivity.
Examples of the metal oxide include, but are not limited to, metal oxides containing as a main component, for example, titanium oxide, zinc oxide, tin oxide, zirconium oxide, cerium oxide, yttrium oxide, boron oxide, magnesium oxide, strontium titanate, potassium titanate, barium titanate, calcium titanate, calcium oxide, ferrite, hafnium oxide, tungsten oxide, iron oxide, copper oxide, nickel oxide, cobalt oxide, barium oxide, strontium oxide, vanadium oxide, indium oxide, aluminisilicic acid, calcium phosphate, and aluminosilicate. One of these metal oxides may be used alone or two or more of these metal oxides may be used in combination. Among these metal oxides, titanium oxide, zinc oxide, tin oxide, zirconium oxide, iron oxide, magnesium oxide, indium oxide, and tungsten oxide are preferable in terms of electric properties such as conductivity, physical properties such as optical properties, and response speeds of color development and decolorization.

### <First electrode and second electrode>

The first electrode and the second electrode are not particularly limited so long as the first electrode or the second electrode, or both are transparent. Known conductors may be appropriately selected depending on the intended purpose.

The transparent electrode is not particularly limited and may be appropriately selected depending on the intended purpose so long as the transparent electrode is formed of a transparent material having conductivity. Examples of the transparent electrode include, but are not limited to, inorganic materials such as tin-doped indium oxide (hereinafter, may be referred to as "ITO"), fluorine-doped tin oxide (hereinafter, may be referred to as "FTO"), antimony-doped tin oxide (hereinafter, may be referred to as "ATO"); ITO, InSnO, GaZnO, SnO, In₂O₃, and zinc oxide (ZnO).

Moreover, transparent carbon nanotube may be used, and electrodes formed of, for example, highly conductive non-transmissive materials such as Au, Ag, Pt, and Cu that are formed into a minute network shape to have transparency while having improved conductivity may also be used.

### <Other members>

The other members are not particularly limited and may be appropriately selected depending on the intended purpose. Examples of the other members include, but are not limited to, a supporting member, a sealing material, an insulating porous layer, a deterioration preventing layer, and a protective layer.

### -Supporting member-

As the supporting member, a known organic material or inorganic material may be used as is, so long as the material is a transparent material that can support each layer.

Examples of the supporting member include, but are not limited to, glass substrates formed of, for example, non-alkali glass, borosilicate glass, float glass, and soda-lime glass; and resin substrates formed of, for example, polycarbonate resins, acrylic resins, polyethylene, polyvinyl chloride, polyester, epoxy resins, melamine resins, phenol resins, polyurethane resins, and polyimide resins.

The surface of the supporting member may be coated with, for example, a transparent insulating layer, a UV cutting layer, and an antireflection layer in order to enhance a water vapor barrier property, a gas barrier property, ultraviolet resistance, and visibility.

The shape of the supporting member is not particularly limited and may be appropriately selected depending on the intended purpose. Examples of the shape of the supporting member include, but are not limited to, a rectangular shape, and a round shape.

The supporting member may include a plurality of members that are to be overlaid one on another. For example, the electrochromic element may be sandwiched between two glass substrates, in order to enhance a water vapor barrier property and a gas barrier property.

### -Sealing material-

The sealing material has a function of, for example, sealing the side surfaces of the electrochromic element formed of layers pasted with each other, and preventing intrusion of unnecessary matters for the electrochromic element to operate stably, such as moisture and oxygen in the air.

The sealing material is not particularly limited and may be appropriately selected depending on the intended purpose. Examples of the sealing material include, but are not limited to, ultraviolet-curable and thermosetting resins. Specific examples of the sealing material include, but are not limited to, acrylic-based resins, urethane-based resins, and epoxy-based resins.

### -Insulating porous layer-

The insulating porous layer has a function of separating the first electrode and the second electrode from each other for electrical insulation, and holding an electrolyte.

The material of the insulating porous layer is not particularly limited so long as the material is porous. It is preferable to use organic materials and inorganic materials having a high insulating property, a high durability, and an excellent film formation property, and composite materials of these materials.

Examples of the method for forming the insulating porous layer include, but are not limited to, a sintering method (use of pores generated between polymeric particles or inorganic particles partially fused with each other by addition of, for example, a binder), an extraction method (forming a layer using, for example, an organic material or an inorganic material soluble in a solvent and a binder insoluble in a solvent, and subsequently dissolving the organic material or the inorganic material in a solvent to obtain pores), a foaming method, a phase inversion method of operating a good solvent and a poor solvent to induce phase separation in a mixture of, for example, polymeric compounds, and a radiation irradiation method of radiating various radioactive rays to form pores.

### -Protective layer-

The protective layer has a function of protecting an electrochromic element from an external stress and chemicals used in a washing step, preventing leakage of the gel electrolyte, and preventing intrusion of unnecessary matters for the electrochromic element to operate stably, such as moisture and oxygen in the air.

The material of the protective layer is not particularly limited. Examples of the material of the protective layer include, but are not limited to, ultraviolet-curable and thermosetting resins. Specific examples of the material of the protective layer include, but are not limited to, acrylic-based resins, urethane-based resins, and epoxy-based resins.

FIG. 3 is a schematic diagram illustrating an example of the electrochromic element of the present disclosure including the gel electrolyte of the present disclosure.

As illustrated in FIG. 3, the electrochromic element includes a first electrode 3, a second electrode 2, and a gel electrolyte 6 between the first electrode 3 and the second electrode 2. The first electrode 3 and the second electrode 2 are sandwiched between supporting members 1. The first electrode 3 has an electrochromic layer 5 on a surface thereof. The second electrode 2 has an electrochromic layer 7 on a surface thereof. The electrochromic layer 5 contains an electrochromic compound 4. The electrochromic layer 7 may also contain the electrochromic compound 4.

### <Applications of electrochromic element>

The electrochromic element of the present disclosure has a high transparency and an excellent responsiveness in color development. Therefore, the electrochromic element of the present disclosure can be suitably used for, for example, electrochromic displays, large-size display panels such as display panels for stock prices, anti-glare mirrors, and light control elements such as light control glasses, low-voltage drive elements such as touch panel-type key switches, optical switches, optical memories, electronic paper, and electronic albums.

### [Examples]

The present disclosure will be described below by way of Examples. The present disclosure should not be construed as being limited to these Examples.

### (Example 1)

### <Production of electrolyte film>

IRGACURE 184 (obtained from BASF GmbH) serving as a polymerization initiator was dissolved in urethane acrylate (product name: UXF4002, obtained from Nippon Kayaku Co., Ltd) serving as a binder resin in a manner that a mass ratio (binder resin/polymerization initiator) would be 99.5/0.5, to obtain a monomer solution.

Next, a 1 mol/L propylene carbonate (PC, obtained from FUJIFILM Wako Pure Chemical Corporation) solution of tributyl ammonium perchlorate (TBAP, obtained from Tokyo Chemical Industry Co., Ltd.) serving as a supporting electrolyte was mixed and dissolved at a mass ratio of 20% by mass in the obtained monomer solution, to produce an electrolyte composition.

Next, the obtained electrolyte composition (500 microliters) was dropped onto a release layer-added, light release-side non-adhesive protective film 1 (product name: SPPET-50-O1BU, obtained from Mitsui Chemicals Tohcello Inc.), further covered with a release layer-added, heavy release-side non-adhesive protective film 2 (product name: SPPET-50-O3BU, obtained from Mitsui Chemicals Tohcello Inc.) in order for the electrolyte composition to be spread, and then irradiated with 2 J/cm² using a UV (wavelength of 250 nm) irradiator (obtained from Eye Graphics Co., Ltd.), to obtain a laminate body of non-adhesive protective film 1/gel electrolyte/non-adhesive protective film 2.

Next, peeling index and shear storage modulus were measured and buckling resistance and peelability were evaluated in the manners described below. The results are presented in Table 1-2.

### <Measurement of shear storage modulus>

The gel electrolyte having an average thickness of 700 micrometers and processed into a cylindrical shape having a diameter of 5 mm was sandwiched between SUS304 parallel plates having a diameter of 5 mm, and the shear storage modulus of the gel electrolyte was measured with a dynamic viscoelasticity measuring instrument (obtained from UBM Co., Ltd., RHEOSOL-G5000) at a frequency of 1 Hz in a 25°C environment in a manner that a strain would be within a range in which the gel electrolyte would not plastically deform.

### <Measurement of peeling index>

A probe tack test was performed using a tacking tester (obtained from Rhesca Co., Ltd., TAC-II) in a manner that a SUS304 probe having a diameter of 5 mm was brought into contact with the gel electrolyte having an average thickness of 700 micrometers from above the gel electrolyte at a speed of 120 mm/second, kept under a pressing load of 40 gf for a pressing load retention time of 5 seconds at an environmental condition of 25°C, and peeled in a perpendicular direction at a speed of 400 mm/second. As indicated in FIG. 1, the maximum stress 8 under the measurement conditions described above was divided by the integral value 9 obtained by integrating the stress based on the peeling distance at which the probe was peeled, to calculate a peeling index.

### <Evaluation of buckling resistance>

Buckling resistance was evaluated using the laminate body of non-adhesive protective film 1/gel electrolyte/non-adhesive protective film 2 having a gel electrolyte thickness of 50 micrometers. Specifically, whether the non-adhesive protective film 1 would peel from the gel electrolyte when the laminate body was wound on the side surface of a cylindrical rod having an outer diameter of 20 mm by 1/4 of the circumference of the cylindrical rod in a manner that the non-adhesive protective film 1 would face outward was observed and evaluated according to the criteria described below.

### <Judgment criteria>

A: With a buckling resistance, no movement of the non-adhesive protective film 1 to peel from the gel electrolyte was visually observed.
B: Without a buckling resistance, movement of the non-adhesive protective film 1 to peel from the gel electrolyte was visually observed.

The judgment criteria are based on a finding that when no peeling occurs in the evaluation method described above, a non-adhesive protective film would not peel during conveyance by a conveying roller having an outer diameter of 100 mm commonly used in, for example, a roll-to-roll process and during storage with winding over a core having an outer diameter of 100 mm.

### <Evaluation of peelability>

Peelability was evaluated using the laminate body of non-adhesive protective film 1/gel electrolyte/non-adhesive protective film 2 having a gel electrolyte thickness of 50 micrometers. Specifically, whether the gel electrolyte would be deformed or damaged when the laminate body was set on a flat-plate stage in a manner that the non-adhesive protective film 1 would face upward and the non-adhesive protective film 1 was peeled using an adhesive roller having an outer diameter of 30 mm was evaluated according to the judgment criteria described below.

### <Judgment criteria>

A: Peelability was good, and no movement of the gel electrolyte to follow the non-adhesive protective film desired to be peeled was visually observed, and no deformation and damage were visually observed.

B: Peelability was bad, and movement of the gel electrolyte to follow the non-adhesive protective film desired to be peeled was visually observed, or deformation and damage were visually observed.

### (Examples 2 to 27 and Comparative Examples 1 to26)

Gel electrolytes of Examples 2 to 27 and Comparative Examples 1 to 26 were produced in the same manner as in Example1, except that unlike in Example 1, the gel electrolytes were produced using the components presented in Table 1-1-1, Table 1-1-2, Table 1-2-1, and Table 1-2-2 as the binder resins and the supporting electrolytes of the gel electrolyte films at the mass ratios presented in Table 1-1-1, Table 1-1-2, Table 1-2-1 and Table 1-2-2.

Peeling index, shear storage modulus, buckling resistance, and peelability of the obtained gel electrolytes of Examples 2 to 27 and Comparative Examples 1 to 26 were evaluated in the same manner as in Example 1. The results are presented in Table 1-2-1 and Table 1-2-2.

**[Table 1-1-1]**

| | Binder resin | | | | Non-polvmerizable polymer | | | |
|---|---|---|---|---|---|---|---|---|
| | PMMA acrylate | | Others | | PMMA | | Others | |
| | Product name | Part by mass | Product name | Part by mass | Product name | Part by mass | Product name | Part by mass |
| Ex. 1 | | | UXF4002 | 80 | | | | |
| Comp. Ex. 1 | | | UXF4002 | 60 | | | | |
| Comp. Ex. 2 | | | UXF4002 | 40 | | | | |
| Comp. Ex. 3 | | | UXF4002 | 20 | | | | |
| Ex. 2 | | | UXF4002 | 50 | | | | |
| Ex. 3 | | | UXF4002 | 40 | | | | |
| Comp. Ex. 4 | | | UXF4002 | 30 | | | | |
| Comp. Ex. 5 | | | UXF4002 | 20 | | | | |
| Comp. Ex. 6 | | | UXF4002 | 35 | M4501 | 15 | | |
| Ex. 4 | | | UXF4002 | 45 | M4501 | 5 | | |
| Ex. 5 | | | UXF4002 | 35 | M4501 | 5 | | |
| Ex. 6 | | | UXF4002 | 25 | M4501 | 5 | | |
| Ex. 7 | | | UXF4002 | 15 | M4501 | 5 | | |
| Comp. Ex. 7 | | | UXF4002 | 15 | | | M5000 | 5 |
| Comp. Ex. 8 | | | UXF4002 | 15 | | | M5001 | 5 |
| Ex. 8 | AA-6 | 20 | UXF4002 | 30 | | | | |
| Ex. 9 | AA-6 | 16 | UXF4002 | 24 | | | | |
| Ex. 10 | AA-6 | 12 | UXF4002 | 18 | | | | |
| Ex. 11 | AA-6 | 8 | UXF4002 | 12 | | | | |
| Comp. Ex. 9 | AA-6 | 2 | UXF4002 | 18 | | | | |
| Ex. 12 | AA-6 | 4 | UXF4002 | 16 | | | | |
| Ex. 13 | AA-6 | 7 | UXF4002 | 13 | | | | |
| Comp. Ex. 10 | AA-6 | 9 | UXF4002 | 11 | | | | |
| Comp. Ex. 11 | AA-6 | 10 | UXF4002 | 10 | | | | |
| Comp. Ex. 12 | | | UXF4002:AM-90G=15:5 | 15:5 | | | | |
| Comp. Ex. 13 | | | UXF4002:AM-90G=10:10 | 10:10 | | | | |
| Comp. Ex. 14 | AA-6 | 6 | A-BPE-30:ACMO=1:8 | 9 | | | | |

**[Table 1-1-2]**

| | Binder resin | | | | Non-polvmerizable polymer | | | |
|---|---|---|---|---|---|---|---|---|
| | PMMA acrylate | | Others | | PMMA | | Others | |
| | Product name | Part by mass | Product name | Part by mass | Product name | Part by mass | Product name | Part by mass |
| Ex. 14 | AA-6 | 6 | A-BPE-30:ACMO=3:6 | 9 | | | | |
| Ex. 15 | AA-6 | 6 | A-BPE-30:ACMO=5:4 | 9 | | | | |
| Comp. Ex. 15 | AA-6 | 4 | A-BPE-30:ACMO=1:10 | 11 | | | | |
| Ex. 16 | AA-6 | 4 | A-BPE-30:ACMO=2:9 | 11 | | | | |
| Ex. 17 | AA-6 | 4 | A-BPE-30:ACMO=3:8 | 11 | | | | |
| Comp. Ex. 16 | AA-6 | 4 | A-BPE-30:ACMO=5:6 | 11 | | | | |
| Comp. Ex. 17 | AA-6 | 3 | A-BPE-30:ACMO=1:11 | 12 | | | | |
| Ex. 18 | AA-6 | 3 | A-BPE-30:ACMO=2:10 | 12 | | | | |
| Ex. 19 | | | UV3640PE80 | 40 | | | | |
| Comp. Ex. 18 | | | UV3640PE80 | 30 | | | | |
| Comp. Ex. 19 | | | UV3640PE80 | 20 | | | | |
| Ex. 20 | AA-6 | 5 | UV3640PE80 | 15 | | | | |
| Ex. 21 | | | UV3000B | 40 | | | | |
| Comp. Ex. 20 | | | UV3000B | 30 | | | | |
| Comp. Ex. 21 | | | UV3000B | 20 | | | | |
| Ex. 22 | AA-6 | 5 | UV3000B | 15 | | | | |
| Ex. 23 | | | UXF4002 | 40 | | | | |
| Comp. Ex. 22 | | | UXF4002 | 20 | | | | |
| Ex. 24 | | | UXF4002 | 40 | | | | |
| Comp. Ex. 23 | | | UXF4002 | 20 | | | | |
| Ex. 25 | | | UXF4002 | 40 | | | | |
| Comp. Ex. 24 | | | UXF4002 | 20 | | | | |
| Ex. 26 | | | UXF4002 | 40 | | | | |
| Comp. Ex. 25 | | | UXF4002 | 20 | | | | |
| Ex. 27 | | | UXF4002 | 40 | | | | |
| Comp. Ex. 26 | | | UXF4002 | 20 | | | | |

**[Table 1-2-1]**

| | Supporting electrolyte | | | | Peeling index (mm⁻¹) | Elastic modulus (MPa) | Evaluation result | | Remarks |
|---|---|---|---|---|---|---|---|---|---|
| | Ionic liquid | | Solid salt | | | | Peelability | Buckling resistance | |
| | Product name | Part by mass | Product name | Part by mass | | | | | |
| Ex. 1 | | | TBAP/PC | 20 | 7.4 | 0.301 | A | A | |
| Comp. Ex. 1 | | | TBAP/PC | 40 | 10.0 | 0.251 | A | B | |
| Comp. Ex. 2 | | | TBAP/PC | 60 | 12.4 | 0.162 | A | B | Liquid leakage |
| Comp. Ex. 3 | | | TBAP/PC | 80 | 10.6 | 0.131 | A | B | Liquid leakage |
| Ex. 2 | EMIMFSI | 50 | | | 6.4 | 0.196 | A | A | |
| Ex. 3 | EMIMFSI | 60 | | | 7.5 | 0.176 | A | A | |
| Comp. Ex. 4 | EMIMFSI | 70 | | | 8.7 | 0.147 | A | B | |
| Comp. Ex. 5 | EMIMFSI | 80 | | | 11.0 | 0.113 | A | B | |
| Comp. Ex. 6 | EMIMFSI | 50 | | | - | - | - | - | fail to compatibilize |
| Ex. 4 | EMIMFSI | 50 | | | 6.8 | 0.146 | A | A | |
| Ex. 5 | EMIMFSI | 60 | | | 6.7 | 0.084 | A | A | |
| Ex. 6 | EMIMFSI | 70 | | | 6.3 | 0.052 | A | A | |
| Ex. 7 | EMIMFSI | 80 | | | 5.8 | 0.020 | A | A | |
| Comp. Ex. 7 | EMIMFSI | 80 | | | 9.6 | 0.063 | A | B | |
| Comp. Ex. 8 | EMIMFSI | 80 | | | 9.5 | 0.062 | A | B | |
| Ex. 8 | EMIMFSI | 50 | | | 7.5 | 0.161 | A | A | |
| Ex. 9 | EMIMFSI | 60 | | | 7.0 | 0.129 | A | A | |
| Ex. 10 | EMIMFSI | 70 | | | 6.6 | 0.085 | A | A | |
| Ex. 11 | EMIMFSI | 80 | | | 6.0 | 0.038 | A | A | |
| Comp. Ex. 9 | EMIMFSI | 80 | | | 8.2 | 0.081 | A | B | |
| Ex. 12 | EMIMFSI | 80 | | | 7.5 | 0.063 | A | A | |
| Ex. 13 | EMIMFSI | 80 | | | 6.6 | 0.041 | A | A | |
| Comp. Ex. 10 | EMIMFSI | 80 | | | 5.4 | 0.019 | B | A | |
| Comp. Ex. 11 | EMIMFSI | 80 | | | 4.5 | 0.015 | B | A | |
| Comp. Ex. 12 | EMIMFSI | 80 | | | 9.6 | 0.092 | A | B | |
| Comp. Ex. 13 | EMIMFSI | 80 | | | 10.5 | 0.058 | A | B | |

**[Table 1-2-2]**

| | Supporting electrolyte | | | | Peeling index (mm⁻¹) | Elastic modulus (MPa) | Evaluation result | | Remarks |
|---|---|---|---|---|---|---|---|---|---|
| | Ionic liquid | | Solid salt | | | | Peelability | Buckling resistance | |
| | Product name | Part by mass | Product name | Part by mass | | | | | |
| Comp. Ex. 14 | EMIMFSI | 85 | | | 3.4 | 0.016 | B | A | |
| Ex. 14 | EMIMFSI | 85 | | | 5.9 | 0.047 | A | A | |
| Ex. 15 | EMIMFSI | 85 | | | 7.3 | 0.065 | A | A | |
| Comp. Ex. 15 | EMIMFSI | 85 | | | 3.9 | 0.021 | B | A | |
| Ex. 16 | EMIMFSI | 85 | | | 5.5 | 0.041 | A | A | |
| Ex. 17 | EMIMFSI | 85 | | | 6.7 | 0.055 | A | A | |
| Comp. Ex. 16 | EMIMFSI | 85 | | | 8.4 | 0.083 | A | B | |
| Comp. Ex. 17 | EMIMFSI | 85 | | | 3.8 | 0.022 | B | A | |
| Ex. 18 | EMIMFSI | 85 | | | 5.6 | 0.041 | A | A | |
| Ex. 19 | EMIMFSI | 60 | | | 6.5 | 0.154 | A | A | |
| Comp. Ex. 18 | EMIMFSI | 70 | | | 8.8 | 0.107 | A | B | |
| Comp. Ex. 19 | EMIMFSI | 80 | | | 11.8 | 0.078 | A | B | |
| Ex. 20 | EMIMFSI | 80 | | | 7.3 | 0.053 | A | A | |
| Ex. 21 | EMIMFSI | 60 | | | 5.6 | 0.138 | A | A | |
| Comp. Ex. 20 | EMIMFSI | 70 | | | 7.7 | 0.129 | A | B | |
| Comp. Ex. 21 | EMIMFSI | 80 | | | 9.2 | 0.103 | A | B | |
| Ex. 22 | EMIMFSI | 80 | | | 7.0 | 0.048 | A | A | |
| Ex. 23 | EMIMTCB | 60 | | | 7.3 | 0.177 | A | A | |
| Comp. Ex. 22 | EMIMTCB | 80 | | | 9.9 | 0.120 | A | B | |
| Ex. 24 | EMIMTFSI | 60 | | | 7.3 | 0.180 | A | A | |
| Comp. Ex. 23 | EMIMTFSI | 80 | | | 9.3 | 0.119 | A | B | |
| Ex. 25 | EMIMFAP | 60 | | | 6.9 | 0.169 | A | A | |
| Comp. Ex. 24 | EMIMFAP | 80 | | | 9.5 | 0.123 | A | B | |
| Ex. 26 | ABIMBF4 | 60 | | | 7.4 | 0.182 | A | A | |
| Comp. Ex. 25 | ABIMBF4 | 80 | | | 10.6 | 0.124 | A | B | |
| Ex. 27 | P13FSI | 60 | | | 7.5 | 0.199 | A | A | |
| Comp. Ex. 26 | P13FSI | 80 | | | 11.4 | 0.135 | A | **B** | |

The details of the abbreviations in Table 1-1-1, Table 1-1-2, Table 1-2-1, and Table 1-2-2 are as follows.
- Polymethyl methacrylate (PMMA) acrylate (a polymer having a PMMA chain)-
- AA-6 (obtained from TOAGOSEI CO., LTD.)

- Other binder resins-
- UXF4002 (obtained from Nippon Kayaku Co., Ltd.)
- UV3640PE80 (obtained from Mitsubishi Chemical Corporation)
- UV3000B (obtained from Mitsubishi Chemical Corporation)
- AM-90G (obtained from Shin-Nakamura Chemical Co., Ltd.)
- A-BPE-30 (obtained from Shin-Nakamura Chemical Co., Ltd.)
- ACMO (obtained from FUJIFILM Wako Pure Chemical Corporation)

- Non-polymerizable polymer-
- M4501 (obtained from Negami Chemical Industrial Co., Ltd)
- M5000 (obtained from Negami Chemical Industrial Co., Ltd)
- M5001 (obtained from Negami Chemical Industrial Co., Ltd)

- Supporting electrolyte-
- TBAP (Tributyl ammonium perchlorate, obtained from Tokyo Chemical Industry Co., Ltd.)
- PC (Propylene carbonate, obtained from FUJIFILM Wako Pure Chemical Corporation)
- EMIMFSI (Ethylmethylimidazolium bisfluorosulfonimide, obtained from Kanto Chemical Co., Inc.)
- EMIMTCB (Ethyl methyl imidazolium tetracyanoborate, obtained from Merck KGaA)
- EMIMTFSI (Ethyl methyl imidazolium bistrifluoromethane sulfonimide, obtained from Kanto Chemical Co., Inc.)
- EMIMFAP (Ethyl methyl imidazolium tripentafluoroethyl trifluorophosphate, obtained from Merck KGaA)
- ABIMBF4 (Allyl butyl imidazolium tetrafluoroborate, obtained from Kanto Chemical Co., Inc.)
- P13FSI (Methyl propyl pyrrolidinium bisfluorosulfonimide, obtained from Kanto Chemical Co., Inc.)

From the results of Table 1-1-1, Table 1-1-2, Table 1-2-1, and Table 1-2-2, it was revealed that all of the gel electrolytes of Examples 1 to 27 achieved a peeling index within the range of 5.5 mm⁻¹ or greater but 7.5 mm⁻¹ or less in the probe tack test described above and exhibited a good buckling resistance and a good peelability.

From the results of Examples 2 to 27, it was revealed that when an ionic liquid was used as the supporting electrolyte, gel electrolytes having a peeling index within the range of 5.5 mm⁻¹ or greater but 7.5 mm⁻¹ or less in the probe tack test described above and having a good buckling resistance and a good peelability were successfully obtained even when the content of the supporting electrolyte was high.

From the results of Examples 4 to 18 and 20 to 22, it was revealed that when the binder resin was a polymer having a polymethyl methacrylate (PMMA) chain, gel electrolytes having a peeling index within the range of 5.5 mm⁻¹ or greater but 7.5 mm⁻¹ or less in the probe tack test described above and having a good buckling resistance and a good peelability were successfully obtained even when the proportion of the ionic liquid was 70% by mass or greater.

From the results of Examples 8 to 18 and 20 to 22, it was revealed that when a crosslinked body obtained by crosslinking a polymer having a polymethyl methacrylate (PMMA) chain was contained in the binder resin, the binder resin was able to contain PMMA in a large amount because of an excellent compatibility with the ionic liquid, and this further facilitated obtaining gel electrolytes having a peeling index within the range of 5.5 mm⁻¹ or greater but 7.5 mm⁻¹ or less in the probe tack test described above even when the proportion of the ionic liquid was 80% by mass or greater.

### (Example 28)

Impedance was measured in the manner described below using a gel electrolyte obtained by injecting the same electrolyte composition as in Example 2 between platinum electrodes opposed to each other and irradiating the resultant with 2 J/cm² using a UV (wavelength of 250 nm) irradiator (obtained from Eye Graphics Co., Ltd.).

### <Evaluation of ionic conductivity>

The impedance of the device was measured according to an alternating current impedance method. A module-type electrochemical measuring system (instrument name: MODULAB, obtained from Toyo Technica Co., Ltd.) was used as the measuring instrument, and the impedance was measured at an applied AC voltage of 10 mV, within a measurement frequency range of from 1 Hz through 1,000,000 Hz, at a measurement temperature of 25°C. As a result of the measurement, an impedance waveform having a shape illustrated in FIG. 4 was obtained. The length of the chord of the arc was measured as the ionic conductivity of the gel electrolyte. The result is presented in Table 2.

### (Examples 29 to 37 and Comparative Examples 27 and 28)

Gel electrolytes of Examples 29 to 37 and Comparative Examples 27 and 28 were produced in the same manner as in Example 28, except that unlike in Example 28, the gel electrolytes were produced using the components presented in Table 2-1 as the binder resins and the supporting electrolytes of the electrolyte compositions.

Next, the impedance of the obtained gel electrolytes of Examples 29 to 37 and Comparative Examples 27 and 28 was measured in the same manner as in Example 28. The results are presented in Table 2-2.

**[Table 2-1]**

| | Binder resin | | | | Non-polymerizable polymer | | Supporting electrolyte | |
|---|---|---|---|---|---|---|---|---|
| | PMMA acrylate | | Others | | PMMA | | Ionic liquid | |
| | Product name | Part by mass | Product name | Part by mass | Product name | Part by mass | Product name | Part by mass |
| Ex. 28 | | | UXF4002 | 50 | | | EMIMFSI | 50 |
| Ex. 29 | | | UXF4002 | 40 | | | EMIMFSI | 60 |
| Comp. Ex. 27 | | | UXF4002 | 30 | | | EMIMFSI | 70 |
| Comp. Ex. 28 | | | UXF4002 | 20 | | | EMIMFSI | 80 |
| Ex. 30 | | | UXF4002 | 45 | M4501 | 5 | EMIMFSI | 50 |
| Ex. 31 | | | UXF4002 | 35 | M4501 | 5 | EMIMFSI | 60 |
| Ex. 32 | | | UXF4002 | 25 | M4501 | 5 | EMIMFSI | 70 |
| Ex. 33 | | | UXF4002 | 15 | M4501 | 5 | EMIMFSI | 80 |
| Ex. 34 | AA-6 | 20 | UXF4002 | 30 | | | EMIMFSI | 50 |
| Ex. 35 | AA-6 | 16 | UXF4002 | 24 | | | EMIMFSI | 60 |
| Ex. 36 | AA-6 | 12 | UXF4002 | 18 | | | EMIMFSI | 70 |
| Ex. 37 | AA-6 | 8 | UXF4002 | 12 | | | EMIMFSI | 80 |

**[Table 2-2]**

| | Peeling index (mm⁻¹) | Evaluation result | | Ionic conductivity (mS/cm) |
|---|---|---|---|---|
| | | Peelability | Buckling resistance | |
| Ex. 28 | 6.4 | A | A | 0.42 |
| Ex. 29 | 7.5 | A | A | 0.98 |
| Comp. Ex. 27 | 8.7 | A | B | 2.86 |
| Comp. Ex. 28 | 11.0 | A | B | 6.12 |
| Ex. 30 | 6.8 | A | A | 0.36 |
| Ex. 31 | 6.7 | A | A | 0.88 |
| Ex. 32 | 6.3 | A | A | 3.01 |
| Ex. 33 | 5.8 | A | A | 5.98 |
| Ex. 34 | 7.5 | A | A | 0.33 |
| Ex. 35 | 7.0 | A | A | 0.96 |
| Ex. 36 | 6.6 | A | A | 2.77 |
| Ex. 37 | 6.0 | A | A | 5.36 |

From the results of Table 2-1 and Table 2-2, it was revealed that the gel electrolytes of Examples 32, 33, and 36, and 37 in which the proportion of the ionic liquid was 70% by mass or greater exhibited a high ionic conductivity of 1 mS/cm or higher, and particularly when the proportion of the ionic liquid was 80% by mass or greater, the gel electrolyte exhibited an extremely high ion conductivity of 5 mS/cm or higher.

### (Example 38)

### <Electrochromic element production example>

### -Formation of electrochromic layer on surface of first electrode-

A solution obtained by mixing polyethylene diacrylate (product name: PEG-400DA, obtained from Nippon Kayaku Co., Ltd.), IRGACURE 184 (obtained from BASF GmbH), a compound represented by Structural formula (1) below, and 2-butanone at a mass ratio (57/3/140/800) was applied on an ITO glass substrate (with a size of 40 mm × 40 mm, an average thickness of 0.7 mm, and an ITO film thickness of about 100 nm) serving as a first electrode by a spin coating method, and cured with UV in a nitrogen atmosphere, to form an electrochromic layer having an average thickness of 1.1 micrometers and containing the compound represented by Structural formula on the first electrode.

### <Compound represented by Structural formula (1)>

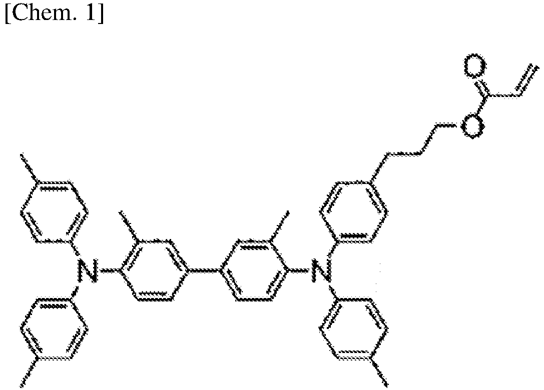

### <Formation of electrochromic layer on second electrode>

A titanium oxide nanoparticle dispersion liquid (product name: SP210, obtained from Showa Titanium Co., Ltd., with an average particle diameter of about 20 nm) was applied on an ITO glass substrate (with a size of 40 mm × 40 mm, an average thickness of 0.7 mm, and an ITO film thickness of about 100 nm) serving as a second electrode by a spin coating method, and annealed at 120°C for 15 minutes, to form a titanium oxide particle film. A 2% by mass 2,2,3,3-tetrafluoropropanol solution of a compound represented by Structural formula (2) below was applied as a coating liquid on the titanium oxide particle film by a spin coating method, and annealed at 120°C for 10 minutes, to form an electrochromic layer that had an average thickness of 1.0 micrometer and in which the compound represented by Structural formula (2) was adsorbed to the surface of the titanium oxide particles on the second electrode.

### <Structural formula (2)>

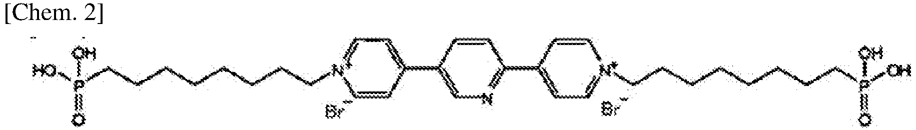

### <Production of cell>

The same gel electrolyte as Example 2 was pasted on the second electrode on which the electrochromic layer was formed, the first electrode on which the electrochromic layer was formed was further pasted thereon, and the end portions of the resultant were sealed with an UV adhesive (PHOTOLEC E, a low moisture-permeable type, obtained from Sekisui Chemical Co., Ltd.), to produce a cell.

### <Haze value>

As a quick evaluation of optical strain, the haze value of the cell was measured using a haze meter (obtained from Nippon Denshoku Industries Co., Ltd., NDH-5000). The result is presented in Table 3-2.

### (Examples 39 to 48 and Comparative Examples 29 to 31)

Gel electrolytes of Examples 39 to 48 and Comparative Examples 29 to 31 were produced in the same manner as in Example 38, except that unlike in Example 38, the gel electrolytes were produced using the components presented in Table 3-1 and 3-2 as the binder resins and the supporting electrolytes of the electrolyte compositions.

Next, the haze values of the obtained gel electrolytes of Examples 39 to 48 and Comparative Examples 29 to 31 were measured in the same manner as in Example 38. The results are presented in Table 3-2.

**[Table 3-1]**

| | Binder resin | | | | Non-polymerizable polymer | | Supporting electrolyte | | | |
|---|---|---|---|---|---|---|---|---|---|---|
| | PMMA acrylate | | Others | | PMMA | | Ionic liquid | | Solid salt | |
| | Product name | Part by mass | Product name | Part by mass | Product name | Part by mass | Product name | Part by mass | Product name | Part by mass |
| Ex. 38 | | | UXF4002 | 80 | | | | | TBAP /PC | 20 |
| Comp. Ex. 29 | | | UXF4002 | 60 | | | | | TBAP /PC | 40 |
| Ex. 40 | | | UXF4002 | 50 | | | EMIMFSI | 50 | | |
| Ex. 41 | | | UXF4002 | 40 | | | EMIMFSI | 60 | | |
| Comp. Ex..30 | | | UXF4002 | 30 | | | EMIMFSI | 70 | | |
| Comp. Ex. 31 | | | UXF4002 | 20 | | | EMIMFSI | 80 | | |
| Ex. 41 | | | UXF4002 | 45 | M4501 | 5 | EMIMFSI | 50 | | |
| Ex. 42 | | | UXF4002 | 35 | M4501 | 5 | EMIMFSI | 60 | | |
| Ex. 43 | | | UXF4002 | 25 | M4501 | 5 | EMIMFSI | 70 | | |
| Ex. 44 | | | UXF4002 | 15 | M4501 | 5 | EMIMFSI | 80 | | |
| Ex. 45 | AA-6 | 20 | UXF4002 | 30 | | | EMIMFSI | 50 | | |
| Ex. 46 | AA-6 | 16 | UXF4002 | 24 | | | EMIMFSI | 60 | | |
| Ex. 47 | AA-6 | 12 | UXF4002 | 18 | | | EMIMFSI | 70 | | |
| Ex. 48 | AA-6 | 8 | UXF4002 | 12 | | | EMIMFSI | 80 | | |

**[Table 3-2]**

| | Peeling index (mm⁻¹) | Evaluation result | | Haze value | Remarks |
|---|---|---|---|---|---|
| | | Peelability | Buckling resistance | | |
| Ex. 38 | 7.4 | A | A | 0.49 | |
| Comp. Ex. 29 | 10.0 | A | B | 2.14 | Clearance occurred during pasting |
| Ex. 40 | 6.4 | A | A | 0.47 | |
| Ex. 41 | 7.5 | A | A | 0.45 | |
| Comp. Ex..30 | 8.7 | A | B | 3.68 | Clearance occurred during pasting |
| Comp. Ex. 31 | 11.0 | A | B | 2.91 | Clearance occurred during pasting |
| Ex. 41 | 6.8 | A | A | 0.50 | |
| Ex. 42 | 6.7 | A | A | 0.47 | |
| Ex. 43 | 6.3 | A | A | 0.48 | |
| Ex. 44 | 5.8 | A | A | 0.46 | |
| Ex. 45 | 7.5 | A | A | 0.48 | |
| Ex. 46 | 7.0 | A | A | 0.47 | |
| Ex. 47 | 6.6 | A | A | 0.44 | |
| Ex. 48 | 6.0 | A | A | 0.45 | |

From the results of Table 3-1 and Table 3-2, it was revealed that the gel electrolytes of Examples 38 to 48 having a good buckling resistance and a good peelability had no optical strain, and hence exhibited excellent haze values without occurrence of clearance at the interface between the gel electrolytes and the electrochromic layers during production of the electrochromic elements.

Aspects and embodiments of the present disclosure are, for example, as follows.
<1> A gel electrolyte including
   a cured product of an electrolyte composition containing a binder resin and a supporting electrolyte,
   wherein the gel electrolyte has a peeling index of 5.5 mm⁻¹ or greater but 7.5 mm⁻¹ or less, where the peeling index is obtained by dividing a maximum stress by an integral value obtained by integrating a stress based on a peeling distance, where the stress, the peeling distance, and the maximum stress are measured by a probe tack test performed at an environmental condition of 25°C by bringing a stainless steel probe having a diameter of 5 mm into contact with the gel electrolyte having an average thickness of 700 micrometers from above the gel electrolyte at a speed of 120 mm/second, keeping the stainless steel probe under a pressing load of 40 gf for a pressing load retention time of 5 seconds, and peeling the stainless steel probe in a perpendicular direction at a speed of 400 mm/second.
<2> The gel electrolyte according to <1>,
   wherein the supporting electrolyte contains an ionic liquid.
<3> The gel electrolyte according to <2>,
   wherein the ionic liquid is ethylmethylimidazolium bisfluorosulfonimide.
<4> The gel electrolyte according to any one of <1> to <3>,
   wherein the binder resin contains a polymer having a polymethyl methacrylate chain.
<5> The gel electrolyte according to <4>,
   wherein the binder resin contains a crosslinked body in which the polymer having the polymethyl methacrylate chain is crosslinked.
<6> The gel electrolyte according to any one of <2> to <5>,
   wherein a proportion of the ionic liquid is 70% by mass or greater.
<7> The gel electrolyte according to <6>,
   wherein the proportion of the ionic liquid is 80% by mass or greater.
<8> The gel electrolyte according to any one of <1> to <7>,
   wherein a shear storage modulus of the gel electrolyte is 0.02 MPa or greater.
<9> The gel electrolyte according to any one of <1> to <8>,
   wherein the gel electrolyte is used in an electrochromic element.
<10> An electrochromic element including:
   a first electrode;
   a second electrode;
   an electrochromic layer between the first electrode and the second electrode, the electrochromic layer containing an electrochromic compound; and
   an electrolyte layer,
   wherein the electrolyte layer is the gel electrolyte according to any one of <1> to <9>.

The gel electrolyte according to any one of <1> to <9> and the electrochromic element according to <10> can solve the various problems in the related art and achieve the object of the present disclosure.

The above-described embodiments are illustrative and do not limit the present invention. Thus, numerous additional modifications and variations are possible within the scope of the appended claims.

This patent application is based on and claims priority to Japanese Patent Application No. 2021-039826, filed on March 12 2021, in the Japan Patent Office.

### [Reference Signs List]

1: supporting member
2: second electrode
3: first electrode
4: electrochromic compound
5: electrochromic layer
6: gel electrolyte
7: electrochromic layer

## Claims

1. A gel electrolyte comprising
a cured product of an electrolyte composition containing a binder resin and a supporting electrolyte, **characterized in that** the gel electrolyte has a peeling index of 5.5 mm⁻¹ or greater but 7.5 mm⁻¹ or less, where the peeling index is obtained by dividing a maximum stress by an integral value obtained by integrating a stress based on a peeling distance,
where the stress, the peeling distance, and the maximum stress are measured by a probe tack test performed at an environmental condition of 25°C by bringing a stainless steel probe having a diameter of 5 mm into contact with the gel electrolyte having an average thickness of 700 micrometers from above the gel electrolyte at a speed of 120 mm/second, keeping the stainless steel probe under a pressing load of 40 gf for a pressing load retention time of 5 seconds, and peeling the stainless steel probe in a perpendicular direction at a speed of 400 mm/second.

2. The gel electrolyte according to according to claim 1,
wherein the supporting electrolyte contains an ionic liquid.

3. The gel electrolyte according to claim 2,
wherein the ionic liquid is ethylmethylimidazolium bisfluorosulfonimide.

4. The gel electrolyte according to any one of claims 1 to 3,
wherein the binder resin contains a polymer having a polymethyl methacrylate chain.

5. The gel electrolyte according to claim 4,
wherein the binder resin contains a crosslinked body in which the polymer having the polymethyl methacrylate chain is crosslinked.

6. The gel electrolyte according to any one of claims 2 to 5,
wherein a proportion of the ionic liquid is 70% by mass or greater.

7. The gel electrolyte according to claim 6,
wherein the proportion of the ionic liquid is 80% by mass or greater.

8. The gel electrolyte according to any one of claims 1 to 7,
wherein a shear storage modulus of the gel electrolyte is 0.02 MPa or greater.

9. The gel electrolyte according to any one of claims 1 to 8,
wherein the gel electrolyte is used in an electrochromic element.

10. An electrochromic element comprising:
a first electrode;
a second electrode;
an electrochromic layer between the first electrode and the second electrode, the electrochromic layer containing an electrochromic compound; and
an electrolyte layer,
wherein the electrolyte layer is the gel electrolyte according to any one of claims 1 to 9.

## Patentansprüche

1. Gelelektrolyt, umfassend
ein gehärtetes Produkt aus einer Elektrolytzusammensetzung, die ein Bindemittelharz und einen Trägerelektrolyten umfasst,
**dadurch gekennzeichnet, dass** der Gelelektrolyt einen Schälindex von 5,5 mm⁻¹ oder mehr, aber 7,5 mm⁻¹ oder weniger aufweist, wobei der Schälindex durch Dividieren einer maximalen Spannung durch einen Integralwert erhalten wird, der durch Integrieren einer Spannung auf der Grundlage einer Schälstrecke erhalten wird,
wobei die Spannung, die Schälstrecke und die maximale Spannung durch einen Probeklebetest gemessen werden, der bei einer Umgebungsbedingung von 25°C durchgeführt wird, indem eine Probe aus rostfreiem Stahl mit einem Durchmesser von 5 mm mit dem Gelelektrolyten mit einer durchschnittlichen Dicke von 700 Mikrometern von oberhalb des Gelelektrolyten mit einer Geschwindigkeit von 120 mm/Sekunde in Kontakt gebracht wird, die Probe aus rostfreiem Stahl unter einer Drucklast von 40 gf für eine Drucklasthaltezeit von 5 Sekunden gehalten wird und die Probe aus rostfreiem Stahl in einer senkrechten Richtung mit einer Geschwindigkeit von 400 mm/Sekunde geschält wird.

2. Gelelektrolyt nach Anspruch 1,
wobei der Trägerelektrolyt eine ionische Flüssigkeit enthält.

3. Gelelektrolyt nach Anspruch 2,
wobei die ionische Flüssigkeit Ethylmethylimidazoliumbisfluorsulfonimid ist.

4. Gelelektrolyt nach einem der Ansprüche 1 bis 3,
wobei das Bindemittelharz ein Polymer mit einer Polymethylmethacrylatkette enthält.

5. Gelelektrolyt nach Anspruch 4,
wobei das Bindemittelharz einen vernetzten Körper enthält, in dem das Polymer mit der Polymethylmethacrylatkette vernetzt ist.

6. Gelelektrolyt nach einem der Ansprüche 2 bis 5,
wobei der Anteil der ionischen Flüssigkeit 70 Massenprozent oder mehr beträgt.

7. Gelelektrolyt nach Anspruch 6,
wobei der Anteil der ionischen Flüssigkeit 80 Massenprozent oder mehr beträgt.

8. Gelelektrolyt nach einem der Ansprüche 1 bis 7,
wobei ein Scherspeichermodul des Gelelektrolyten 0,02 MPa oder mehr beträgt.

9. Gelelektrolyt nach einem der Ansprüche 1 bis 8,
wobei der Gelelektrolyt in einem elektrochromen Element verwendet wird.

10. Elektrochromes Element, umfassend:
eine erste Elektrode;
eine zweite Elektrode;
eine elektrochrome Schicht zwischen der ersten Elektrode und der zweiten Elektrode, wobei die elektrochrome Schicht eine elektrochrome Verbindung enthält; und
eine Elektrolytschicht,
wobei die Elektrolytschicht der Gelelektrolyt nach einem der Ansprüche 1 bis 9 ist.

## Revendications

1. Électrolyte en gel comprenant
un produit durci d'une composition électrolytique contenant une résine liante et un électrolyte de support,
**caractérisé en ce que**,
l'électrolyte en gel présente un indice de pelage de 5,5 mm⁻¹ ou plus mais de 7,5 mm⁻¹ ou moins, l'indice de pelage étant obtenu en divisant une contrainte maximale par une valeur intégrale obtenue en intégrant une contrainte basée sur une distance de pelage, la contrainte, la distance de pelage et la contrainte maximale étant mesurées par un test de collage de sonde effectué dans des conditions environnementales de 25°C en mettant une sonde en acier inoxydable ayant un diamètre de 5 mm en contact avec l'électrolyte en gel ayant une épaisseur moyenne de 700 micromètres au-dessus de l'électrolyte en gel à une vitesse de 120 mm/seconde, en maintenant la sonde en acier inoxydable sous une charge de pression de 40 gf pendant un temps de rétention de charge de pression de 5 secondes, et en pelant la sonde en acier inoxydable dans une direction perpendiculaire à une vitesse de 400 mm/seconde.

2. Électrolyte en gel selon la revendication 1, dans lequel l'électrolyte de support contient un liquide ionique.

3. Électrolyte en gel selon la revendication 2, dans lequel le liquide ionique est l'éthylméthylimidazolium bisfluorosulfonimide.

4. Électrolyte en gel selon l'une quelconque des revendications 1 à 3, dans lequel la résine liante contient un polymère ayant une chaîne de polyméthacrylate de méthyle.

5. Électrolyte en gel selon la revendication 4, dans lequel la résine liante contient un corps réticulé dans lequel le polymère ayant la chaîne de polyméthacrylate de méthyle est réticulé.

6. Électrolyte en gel selon l'une quelconque des revendications 2 à 5, dans lequel une proportion du liquide ionique est de 70 % en masse ou plus.

7. Électrolyte en gel selon la revendication 6, dans lequel la proportion du liquide ionique est de 80 % en masse ou plus.

8. Électrolyte en gel selon l'une quelconque des revendications 1 à 7, dans lequel un module de stockage de cisaillement de l'électrolyte en gel est de 0,02 MPa ou plus.

9. Électrolyte en gel selon l'une quelconque des revendications 1 à 8, dans lequel l'électrolyte en gel est utilisé dans un élément électrochromique.

10. Elément électrochrome comprenant :
une première électrode ;
une deuxième électrode ;
une couche électrochromique entre la première électrode et la seconde électrode, la couche électrochromique contenant un composé électrochromique ; et
une couche d'électrolyte,
dans lequel la couche d'électrolyte est l'électrolyte en gel selon l'une quelconque des revendications 1 à 9.
